# EUROPEAN PATENT SPECIFICATION

(11) **EP 3 212 719 B1**
(45) Date of publication and mention of the grant of the patent: **10.04.2019**
(21) Application number: 15784714.6
(22) Date of filing: 26.10.2015
(51) Int. Cl.: C09D 5/00, C09D 5/16

(54) **FOULING CONTROL COATING COMPOSTION COMPRISING A POLYMER CONTAINING SILYL ESTER GROUPS, AND A POLYMER COMPRISING QUATERNARY AMMONIUM/PHOSPHONIUM SULPHONATE GROUPS**
BESCHICHTUNGSZUSAMMENSETZUNG ZUR FÄULNISVERHINDERUNG MIT EINEM POLYMER MIT SILYLESTERGRUPPEN UND EINEM POLYMER MIT QUATERNÄREN AMMONIUM-/PHOSPHONIUMSULFONATGRUPPEN
COMPOSITION DE REVÊTEMENT ANTI-ENCRASSEMENT COMPRENANT UN POLYMÈRE CONTENANT DES GROUPES D'ESTER DE SILYLE ET POLYMÈRE CONTENANT DES GROUPES DE SULFONATE DE PHOSPHONIUM ET D'AMMONIUM QUATERNAIRES

(30) Priority: 28.10.2014 EP 14190685
(43) Date of publication of application: 06.09.2017
(73) Proprietor: Akzo Nobel Coatings International B.V., 6824 BM Arnhem (NL)
(72) Inventor: RAMSDEN, Richard Mark, Gateshead Tyne and Wear NE10 8TX (GB); BASSARAB, Paul, Newcastle Upon Tyne Tyne and Wear NE7 7FX (GB); PRICE, Clayton, Whitley Bay Tyne and Wear NE25 9JY (GB)
(74) Representative: Akzo Nobel IP Department
(86) International application number: PCT/EP2015/074691
(87) International publication number: WO 2016/066566

(56) References cited:
- EP-A2- 0 802 243
- WO-A1-02/02698
- WO-A1-91/09915
- WO-A1-91/14743
- WO-A1-2004/018533
- WO-A1-2005/005516

## Description

This invention relates to a fouling control coating composition, especially for marine applications, a method of protection of a man-made structure immersed in water and a substrate or structure coated with the fouling control coating composition.

### Background and Summary of the Invention

Man-made structures such as boat hulls, buoys, drilling platforms, oil production rigs, and pipes which are immersed in water are prone to fouling by aquatic organisms such as green and brown algae, barnacles, mussels, and the like. Such structures are commonly of metal, but may also comprise other structural materials such as concrete. This fouling is a nuisance on boat hulls, because it increases frictional resistance during movement through the water, the consequence being reduced speeds and increased fuel costs. It is a nuisance on static structures such as the legs of drilling platforms and oil production rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence that flow rates are reduced.

It is known to use fouling control paint, for instance as a top coat on ships' hulls, to inhibit the settlement and growth of marine organisms such as barnacles and algae, generally by release of a biocide for the marine organisms.

Traditionally, fouling control paints have comprised a relatively inert binder with a biocidal pigment that is leached from the paint. Among the binders which have been used are vinyl resins and rosin. Vinyl resins are seawater-insoluble and paints based on them use a high pigment concentration so as to have contact between the pigment particles to ensure leaching. Rosin is a hard brittle resin that is very slightly soluble in seawater. Rosin-based fouling control paints have been referred to as soluble matrix or eroding paints. The biocidal pigment is very gradually leached out of the matrix of rosin binder in use, leaving a skeletal matrix of rosin, which becomes washed off the hull surface to allow leaching of the biocidal pigment from deep within the paint film.

Many successful fouling control paints in recent years have been "self-polishing polymer" paints based on a polymeric binder to which biocidal tri-organotin moieties are chemically bound and from which the biocidal moieties are gradually hydrolysed by seawater. In such binder systems, the side groups of a linear polymer unit are split off in a first step by reaction with seawater, the polymer framework that remains becoming water-soluble or water-dispersible as a result. In a second step, the water-soluble or water-dispersible framework at the surface of the paint layer on the ship is washed out or eroded. Such paint systems are described for example in GB-A-1 457 590. As the use of tri-organotin has been restricted by legislation and will become prohibited worldwide, there is a need for alternative fouling control substances that can be used in fouling control compositions.

A polymer comprising quaternary ammonium/phosphonium groups capped with an acid is an example of a binder polymer comprising blocked functional groups of which the blocking groups can be hydrolysed, dissociated or exchanged with seawater species, the polymer framework that remains becoming soluble or dispersible in seawater as a result, of which said blocking groups are of low toxicity, preferably non-biocidal. WO2004/018533 describes a fouling control coating composition comprising polymer containing quaternary ammonium groups capped with a conjugate base of a carboxylic acid (i.e. the quaternary ammonium groups are capped with a monoester carbonate anion).

Polymers containing silyl ester groups are also known for use in self-polishing fouling control paint systems and are described in WO 00/77102 A1, US 4,593,055, US 5,436,284 and WO2005005516.
None of these documents teach to prepare a fouling control coating composition comprising a polymer comprising silyl ester groups and polymer comprising a sulphonic acid-capped quaternary ammonium/phosphonium polymer.

The coating composition of the present invention requires both a sulphonic acid-capped quaternary ammonium/phosphonium polymer and a polymer comprising silyl ester groups. Surprisingly, the inventors have found that coatings comprising a blend of these polymers have a superior fouling control performance compared to coatings comprising just one of these types of polymers.

Further, the inventors found the fouling control coating of the present invention remains stable, and has high integrity, i.e. show almost no cracking and a good adhesion, particularly when applied to those parts of a vessel where the coating is alternately wet and dry, for instance at the waterline. Additionally, the coating composition of the present invention shows a sufficiently short drying time. More in particular, the coating composition of the invention has an improved balance of fast drying after application and stability during storage.

The present invention relates to a fouling control coating composition comprising an ingredient having biocidal properties for aquatic organisms and
(a1) a polymer comprising quaternary ammonium groups and/or quaternary phosphonium groups bound to the backbone of the polymer, said quaternary ammonium groups and/or quaternary phosphonium groups being neutralised by a conjugate base of a sulphonic acid having an aliphatic, aromatic, or alkaryl hydrocarbyl group, and
(a2) a polymer comprising silyl ester groups.

The fouling control coating composition of the present invention may be formulated so that it has a VOC of less than 400g/l and a high shear viscosity of less than 20 poise at 25°C.

The VOC level of a composition can be measured according to EPA reference method 24 in conjunction with ASTM standard D 3960-02 or calculated in accordance with ASTM standard D 5201-01. Both methods lead to similar results. When a value is given for the viscosity of a polymer solution or coating composition according to the present invention, reference is made to the high shear viscosity measured using a cone and plate viscometer in accordance with ASTM standard D 4287-00.

Typically, the conjugate base of the sulphonic acid has an aliphatic, aromatic, or alkaryl hydrocarbyl group comprising 6 or more carbon atoms.

The polymer comprising silyl ester groups (a2) may have a weight-average molecular weight of less than 70,000. The polymer comprising silyl ester groups (a2) may have a weight-average molecular weight of greater than 10,000 and less than 70,000.

The weight-average molecular weight of polymer (a1) and polymer (a2) is measurable by GPC (gel permeation chromatography) and is calculated as an absolute molecular weight. The absolute molecular weight may be obtained from GPC by the triple detection approach, using light scattering, viscometer and concentration detectors in combination. GPC of the polymer (a1) may conveniently be performed using hexafluoroisopropanol (HFiP) as solvent.

Polydispersity (D), sometimes also referred to as molecular weight distribution, is defined as the ratio of the weight-average molecular weight (Mw) to the number-average molecular weight (Mn) of the polymer (D=Mw/Mn). The polydispersity can also be determined by GPC.

The weight ratio of polymer (a1):polymer (a2) in the fouling control coating composition may range from 1:20 to 20:1, preferably from 1:4 to 4:1, preferably from 3:1 to 1:3, and most preferably from 65:35 to 35:65.

The polymer (a1) and/or the polymer (a2) may be (meth)acrylic polymers. By (meth)acrylic polymer we mean a polymer obtainable by polymerisation of acrylic acid, methacrylic acid, or a salt, ester, amide or nitrile derivative thereof, optionally with one or more other vinyl polymerisable monomers. A (meth)acrylic polymer is most typically a polymer obtainable by polymerisation of an acrylic acid ester monomer (an "acrylate monomer") and/or a methacrylic acid ester monomer (a "methacrylate monomer"), and optionally one or more other vinyl polymerisable monomers.

Polymer (a1) may therefore be a (meth)acrylic polymer comprising side chains having thereon quaternary ammonium groups and/or quaternary phosphonium groups, said quaternary ammonium groups and/or quaternary phosphonium groups being neutralised by a conjugate base of a sulphonic acid having an aliphatic, aromatic, or alkaryl hydrocarbyl group.

Polymer (a2) may therefore be a (meth)acrylic polymer comprising side chains having thereon a silyl ester group.

Polymer (a1) is obtainable by polymerisation of a monomer of Formula (I), optionally with one or more monomers comprising one or more olefinic double bonds ("vinyl polymerisable monomers") 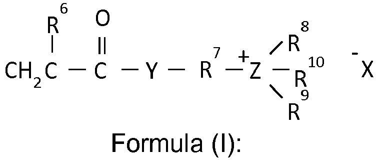
wherein Y is O or NH,
Z+ is N+ or P+,
R⁶ is a hydrogen atom or a C₁-C₄ alkyl group, preferably hydrogen or a C₁-C₂ alkyl group,
R⁷ is a C₂ or a C₃-C₁₂ divalent hydrocarbon group, preferably a C₂ or a C₃-C₈ divalent hydrocarbon group, more preferably a C₂ or a C₃-C₄ divalent hydrocarbon group,
R⁸ and R⁹ independently represent a C₁-C₆ alkyl group, preferably methyl, or an optionally substituted phenyl group,
R¹⁰ is a C₁-C₅ alkyl group,
X⁻ is a conjugate base of a sulphonic acid comprising an aliphatic, aromatic, or alkaryl hydrocarbyl group.

The counter-ion (i.e. X⁻) of polymer (a1) may be a conjugate base of a sulphonic acid comprising 6 to 50 carbon atoms.

The polymer comprising silyl ester groups (a2) preferably comprises at least one side chain bearing at least one terminal group of the Formula (II): 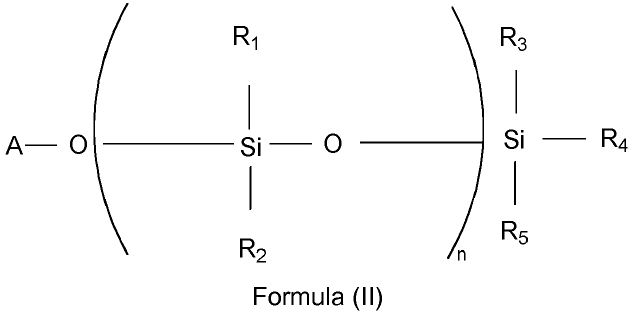 wherein A is divalent -C(O)- or -S(O)₂O- group, n is 0 or an integer of 1 to 50, and R₁, R₂, R₃, R₄, and R₅ are each independently selected from the group consisting of optionally substituted C₁₋₂₀-alkyl, optionally substituted C₁₋₂₀-alkoxy, optionally substituted C₁₋₂₀ aryl, and optionally substituted C₁₋₂₀ aryloxy.

Polymer (a2) may be a (meth)acrylic polymer comprising side chains according to Formula (II).

Typically, n = 0 and R₃, R₄, and R₅ are the same or different and represent methyl, isopropyl, n-butyl, isobutyl, or phenyl.

The fouling control coating composition may further comprise a rosin material and/or a non-hydrolysing, water-insoluble film-forming polymer (a3). The non-hydrolysing, water-insoluble film-forming polymer (a3) may be an acrylate ester polymer or a vinyl ether polymer.

The fouling control coating composition may have a solids content of at least 55 weight %.

The invention further relates to a method of protecting a man-made structure immersed in water from fouling by applying the fouling control coating composition as defined herein to the man-made structure, allowing the fouling control coating composition to form a coating and then immersing the coated man-made structure in water. Examples of man-made structures are boat hulls, buoys, drilling platforms, oil production rigs, and pipes.

The invention further relates to a substrate or structure coated with the fouling control coating composition as described herein.

### Detailed Description

### The sulphonic acid-capped quaternary ammonium/phosphonium polymer (a1)

The fouling control coating composition comprises a polymer comprising quaternary ammonium groups and/or quaternary phosphonium groups bound to the backbone of the polymer, said quaternary ammonium groups and/or quaternary phosphonium groups being neutralised by a conjugate base of a sulphonic acid having an aliphatic, aromatic, or alkaryl hydrocarbyl group. This polymer may be referred herein as a sulphonic acid-capped quaternary ammonium/phosphonium polymer.

The sulphonic acid-capped quaternary ammonium/phosphonium polymer (a1) preferably has a weight-average molecular weight of more than 10,000. For example, the weight-average molecular weight of polymer (a1) may be more than 10,000, and less than 90,000.

The ammonium groups/phosphonium groups are typically located on side chains pendant to the backbone of the polymer.
Typically the conjugate base of the sulphonic acid comprises an aliphatic, aromatic, or alkaryl hydrocarbyl group (preferably aliphatic) and comprises 6 or more carbon atoms.

Such sulphonic acid-capped ammonium/phosphonium polymers are obtainable by the following process comprising the steps of:
1. quaternisation of an amine- or phosphine-functional monomer of Formula (III): 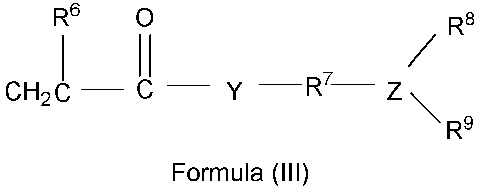 with a dialkyl carbonate wherein each alkyl group is independently a C₁-C₅ alkyl
   wherein
   Y is O or NH, Z is N or P, R⁶ is a hydrogen atom or a C₁-C₄ alkyl group, preferably hydrogen or a C₁-C₂ alkyl group,
   R⁷ is a C₂ or a C₃-C₁₂ divalent hydrocarbon group, preferably a C₂ or a C₃-C₈ divalent hydrocarbon group, more preferably a C₂ or a C₃-C₄ divalent hydrocarbon group,
   R⁸ and R⁹ independently represent a C₁-C₆ alkyl group, preferably methyl, or an optionally substituted phenyl group.
2. replacement of the counter-ion of the resulting quaternised ammonium/phosphonium monomer with a sulphonate counter-ion derived from a sulphonic acid having an aliphatic, aromatic, or alkaryl hydrocarbon group. Preferably the sulphonic acid comprises an aliphatic hydrocarbon group which preferably comprises 6 or more carbon atoms. This results in a quaternary ammonium/phosphonium monomer that is capped with a counter-ion, wherein the counter-ion consists of the conjugate base (anionic residue) of a sulphonic acid, preferably wherein the conjugate base of the sulphonic acid comprises an aliphatic hydrocarbon group preferably comprising 6 or more carbon atoms.
3. polymerisation of at least one of the sulphonic acid-capped quaternary ammonium/ phosphonium monomer(s).

Quaternisation of the amine- or phosphine-functional monomer of Formula (III) [Step 1] can be performed by reacting the monomer of Formula (III) with a dialkyl carbonate wherein each alkyl group is independently a C₁-C₅ alkyl group. The dialkyl carbonate may be for example dimethyl carbonate, ethylmethyl carbonate, diethyl carbonate, or dipropyl carbonate. Most preferred is dimethyl carbonate.

Quaternisation of the amine/phosphine-functional monomer of Formula (III) using the dialkyl carbonate results in a quaternary ammonium/phosphonium-functional monomer of Formula (IV): 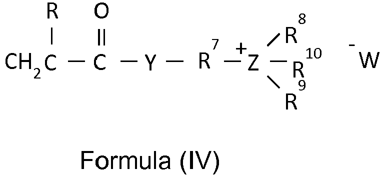 wherein
Y is O or NH,
Z+ is N⁺ or P⁺,
R⁶ is a hydrogen atom or a C₁-C₄ alkyl group, preferably hydrogen or a C₁-C₂ alkyl group,
R⁷ is a C₂ or a C₃-C₁₂ divalent hydrocarbon group, preferably a C₂ or a C₃-C₈ divalent hydrocarbon group, more preferably a C₂ or a C₃-C₄ divalent hydrocarbon group,
R⁸ and R⁹ independently represent a C₁-C₆ alkyl group, preferably methyl, or an optionally substituted phenyl group,
R¹⁰ is a C₁-C₅ alkyl group, preferably R⁵ is methyl,
and W⁻ is a [O-C(O)-R¹¹]⁻ anion, wherein R¹¹ is a monovalent alkyl (e.g. C₁-C₃ alkyl). (i.e. W⁻ is a monoester carbonate ion)

The reaction conditions can be as described in EP-A-291 074 for the quaternisation of a tertiary amine R^{x}R^{y}R^{z}N wherein R^{x}, R^{y}, and R^{z} represent hydrocarbon residues. For instance, the amine-functional monomer of Formula (III) and the dialkyl carbonate can be used in a mol ratio of from 0.2 to 5. Normally, the reaction can take place in the presence or absence of a solvent, at a reaction temperature of from 20°C to 200°C.

Preferably, the reaction is performed at a temperature of from 115°C to 135°C in the presence of an alcohol, preferably methanol, under an increased pressure of about 90 psi to100 psi (6.1 10⁵ Pa to 6.8 10⁵ Pa).

The replacement of the carbonate counter-ion of the ammonium/phosphonium monomer [Step 2] can be performed using a sulphonic acid having an aliphatic, aromatic, or alkaryl hydrocarbon group.

Preferably, the hydrocarbon group of the sulphonic acid comprises 6 or more carbon atoms, more preferably 8 or more carbon atoms. The hydrocarbon group of the sulphonic acid preferably comprises up to 50 carbon atoms, even more preferably up to 30 carbon atoms, and most preferably up to 20 carbon atoms.

The polymerisation of the sulphonic acid-capped quaternary ammonium/phosphonium-functional monomer [Step 3] can be performed by reacting the sulphonic acid-capped quaternary ammonium/phosphonium-functional monomer with one or more vinyl polymerisable monomers (a vinyl polymerisable monomer is a monomer having one or more olefinic double bonds).

Polymer (a1) is therefore obtainable by polymerising a sulphonic acid-capped quaternary ammonium/phosphonium-functional monomer (which may have a structure according to Formula (I)) with one or more vinyl polymerisable monomers.

Examples of vinyl polymerisable monomers include (meth)acrylate esters such as methyl methacrylate, ethyl methacrylate, butyl methacrylate, 2-ethylhexyl methacrylate, 2-hydroxyethyl methacrylate, and methoxyethyl methacrylate; maleic acid esters such as dimethyl maleate and diethyl maleate; fumaric acid esters such as dimethyl fumarate and diethyl fumarate; styrene, vinyl toluene, α-methyl-styrene, vinyl chloride, vinyl acetate, butadiene, acrylamide, acrylonitrile, methacrylic acid, acrylic acid, isobornyl methacrylate, maleic acid, and mixtures thereof.

Preferably, the one or more vinyl polymerisable monomers comprises an ester of (meth)acrylic acid with an alcohol bearing 4 or more carbon atoms. Examples of suitable esters of (meth)acrylic acid with an alcohol bearing 4 or more carbon atom include n-butyl (meth)acrylate, iso-butyl (meth)acrylate, tert-butyl (meth)acrylate, n-pentyl (meth)acrylate, iso-pentyl (meth)acrylate, neo-pentyl (meth)acrylate, n-hexyl (meth)acrylate, iso-hexyl (meth)acrylate, cyclohexyl (meth)acrylate, benzyl (meth)acrylate, phenyl (meth)acrylate, ethylhexyl (meth)acrylate, octyl (meth)acrylate, bornyl (meth)acrylate, and isobornyl (meth)acrylate. Polymer (a1) is therefore obtainable by polymerising the sulphonic acid-capped quaternary ammonium/phosphonium-functional monomer with at least butyl (meth)acrylate or isobornyl (meth)acrylate. Such monomers are relatively hydrophobic. It is possible to adjust the polishing rate of the coating by using a mixture of a hydrophobic and a hydrophilic (meth)acrylate monomers. Examples of optional hydrophilic comonomers are methoxy ethyl (meth)acrylate or a higher polyethylene oxide derivatives, such as ethoxy ethyl (meth)acrylate, propoxy ethyl (meth)acrylate, butoxy ethyl (meth)acrylate, a polyoxyethylene glycol monoalkyl ether (meth)acrylate, such as polyoxyethylene (n=8) glycol monomethyl ether methacrylate, or N-vinyl pyrrolidone. Polymer (a1) is therefore obtainable by polymerising the sulphonic acid-capped quaternary ammonium/phosphonium-functional monomer with a mixture of hydrophobic and hydrophilic (meth)acrylate monomers.

The sulphonic acid-capped ammonium/phosphonium polymer is alternatively obtainable by reaction of a polymer containing quaternary ammonium groups/phosphonium groups capped with a monoester carbonate anion, with a sulphonic acid having an aliphatic, aromatic, or alkaryl hydrocarbon group. Ideally, the hydrocarbon group comprises 6 or more carbon atoms.

The rate at which the paint according to the current invention dissolves or erodes in seawater can be adjusted by the structure of the blocking groups, substantially without problems related to the toxicity of the released groups. Preferably, the blocking groups comprise anionic residues of one or more acids having an aliphatic hydrocarbon group comprising 6 to 50 carbon atoms, more preferably 6 to 20 carbon atoms.

Addition co-polymerisation can be performed with any one of the above noted vinyl polymerisable monomers. The vinyl polymerisable monomers may be prepared by reacting an ester or amide of an alkyl, alkoxyalkyl, carbocylic or heterocyclic alcohol or amine with an unsaturated carboxylic acid, such as methyl acrylate or methacrylate, butyl acrylate or methacrylate, isobutyl acrylate or methacrylate, and isobornyl acrylate or methacrylate.

### Polymer comprising silyl ester groups (a2)

The polymer comprising silyl ester groups (a2) preferably has a weight-average molecular weight of more than 10,000. Preferably the weight-average molecular weight of polymer (a2) is more than 20,000, and less than 70,000.

Polymer (a2) preferably has a polydispersity of more than 1.1; the polydispersity preferably is less than 3.0, even more preferably less than 2.8.

Preferably, more than 10 per cent by weight, even more preferably more than 30 per cent by weight, and highly preferably more than 40 per cent by weight of the monomers forming said polymer (a2) when polymerised provide side chains with silyl ester functionality. Preferably, less than 70 per cent by weight, even more preferably less than 60 per cent by weight of the monomers forming said polymer (a2) when polymerised provide side chains with silyl ester functionality.

The polymer comprising silyl ester groups (a2) preferably comprises at least one side chain bearing at least one terminal group of the Formula (II): 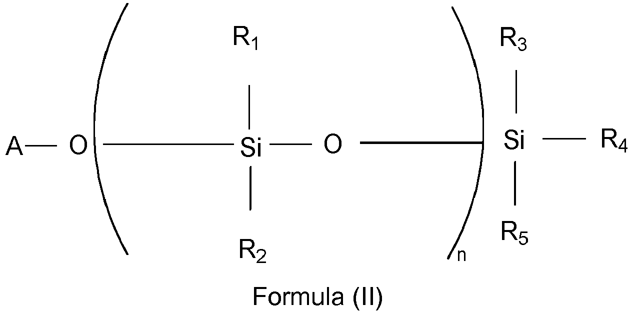
wherein A is divalent -C(O)- or -S(O)₂O- group, n is 0 or an integer of 1 to 50, and R₁, R₂, R₃, R₄, and R₅ are each independently selected from the group consisting of optionally substituted C₁₋₂₀-alkyl, optionally substituted C₁₋₂₀-alkoxy, optionally substituted C₁₋₂₀ aryl, and optionally substituted C₁₋₂₀ aryloxy.
Preferably, n = 0 and R₃, R₄, and R₅ are the same or different and represent methyl, isopropyl, n-butyl, isobutyl, or phenyl.

In the present context, the term C₁₋₂₀-alkyl represents straight, branched, and cyclic hydrocarbon groups having from 1 to 20 carbon atoms, such as methyl, ethyl, propyl, isopropyl, n-butyl, iso-butyl, sec-butyl, tert-butyl, pentyl, hexyl, cyclohexyl, heptyl, octyl, nonyl, decyl, undecyl, dodecyl, tertadecyl, hexadecyl, octadecyl, and icosyl. The term substituted C₁₋₂₀-alkoxy means C₁₋₂₀-alkyl oxy, such as methoxy, ethoxy, propoxy, isopropoxy, n-butoxy, iso-butoxy, sec-butoxy, tert-butoxy, pentoxy, hexoxy, cyclohexoxy, heptoxy, octoxy, nonoxy, decoxy, undecoxy, dodecoxy, tertadecoxy, hexadecoxy, octadecoxy, and ocosoxy. The term aryl is to be understood to mean an aromatic carbocyclic ring or ring system, such as phenyl, naphthyl, biphenyl, and xylyl. The term "optionally substituted" is used to indicate that the group in question may be substituted with substituents one or more times, preferably 1 to 5 times. These substituents may, for example, be hydroxy, alkyl, hydroxyalkyl, alkyl-carbonyloxy, carboxy, alkoxycarbonyl, alkoxy, alkenyloxy, oxo, alkylcarbonyl, aryl, amino, alkylamino, carbamoyl, alkylaminocarbonyl, aminoalkylaminocarbonyl, aminoalkylaminocarbonyl, alkylcarbonylamine, cyano, guanidino, carbamido, alkanoyloxy, sulphono, alkylsulphonyloxy, nitro, sulphanyl, alkylthio, and halogen.

A polymer comprising silyl ester groups (a2) is obtainable by polymerising (i) one or more vinyl polymerisable monomers with (ii) one or more monomers comprising silyl ester groups and one or more olefinic double bonds.

Examples of vinyl polymerisable monomers that can be used to prepare polymer (a2) are essentially the same as the vinyl polymerisable monomers that can be used to prepare polymer (a1) and include, for example, (meth)acrylic polymers such as methacrylic acid, acrylic acid, (meth)acrylate esters such as methyl methacrylate, ethyl methacrylate, butyl methacrylate, 2-ethylhexyl methacrylate, n-butyl (meth)acrylate, iso-butyl (meth)acrylate, tert-butyl (meth)acrylate, n-pentyl (meth)acrylate, iso-pentyl (meth)acrylate, neo-pentyl (meth)acrylate, n-hexyl (meth)acrylate, iso-hexyl (meth)acrylate, cyclohexyl (meth)acrylate, benzyl (meth)acrylate, phenyl (meth)acrylate, ethylhexyl

(meth)acrylate, octyl (meth)acrylate, bornyl (meth)acrylate, and isobornyl (meth)acrylate, methoxy ethyl (meth)acrylate or a higher polyethylene oxide derivative, such as ethoxy ethyl (meth)acrylate, propoxyethyl(meth)acrylate, butoxyethyl (meth)acrylate, 2-hydroxyethyl methacrylate, a polyoxyethylene glycol monoalkyl ether (meth)acrylate, such as polyoxyethylene (n=8) glycol monomethyl ether methacrylate; maleic acid and maleic acid esters such as dimethyl maleate and diethyl maleate; fumaric acid and fumaric acid esters such as dimethyl fumarate and diethyl fumarate; styrene; vinyl toluene; α-methyl-styrene; vinyl chloride; vinyl acetate; butadiene; acrylamide; acrylonitrile; N-vinyl pyrrolidone; and mixtures thereof.

Examples of suitable monomers comprising silyl ester groups and one or more olefinic double bonds include monomers according to Formula (V): 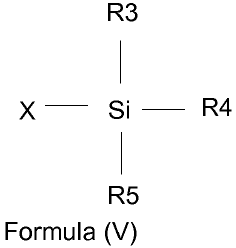
wherein R₃, R₄, and R₅ are each independently selected from the group consisting of optionally substituted C₁₋₂₀-alkyl, optionally substituted C₁₋₂₀-alkoxy, optionally substituted C₁₋₂₀ aryl, and optionally substituted C₁₋₂₀ aryloxy, and X is a (meth)acryloyloxy group, a maleinoyloxy group, a fumaroyloxy group or an itaconyloxy group.
Preferably, n = 0 and R₃, R₄, and R₅ are the same or different and represent methyl, isopropyl, n-butyl, isobutyl, or phenyl.

The preparation of the monomers of Formula (V) can, for example, be performed according to the methods described in EP 0 297 505 or according to the methods described in EP 1 273 589 and the references cited therein. The polymer comprising silyl ester groups may therefore be a (meth)acrylic polymer comprising silyl ester groups.

The monomers comprising silyl ester groups and one or more olefinic double bonds may be one of the following: trimethylsilyl (meth)acrylate, triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-tert-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, dimethylphenylsilyl (meth)acrylate, dimethylcyclohexyl (meth)acrylate, ethyldimethylsilyl (meth)acrylate, n-butyldimethylsilyl (meth)acrylate, t-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, t-butyldiphenylsilyl (meth)acrylate, and lauryldiphenylsilyl (meth)acrylate. Preferably the polymer comprising silyl ester groups (a2) is prepared from at least one of triisopropylsilyl (meth)acrylate, tributylsilyl (meth)acrylate, or triisobutylsilyl (meth)acrylate monomers.

In general, the reaction temperature at which the polymer comprising silyl ester groups (a2)is prepared has an influence on the molecular weight of the polymer. The molecular weight can additionally or alternatively also be adjusted by the amount of initiator used and/or by adding a change transfer agent, e.g. a thiol. The type of initiator influences the degree of polydispersity. For example, the polydispersity may be lowered by choosing an azo-initiator, e.g. azobisisobutyronitrile or azobis-methylbutyronitrile. Alternatively or additionally, the solvent in which the reaction takes place can be adjusted to adjust the molecular weight of the polymer and its polydispersity. The viscosity of the polymer comprising silyl ester groups solution and/or the coating composition can be adjusted by adjusting the molecular weight of the polymer and/or by adjusting its polydispersity, and/or by adjusting the solids content.

### Optional components:

The fouling control coating composition may comprise further resins which are seawater-reactive and/or slightly soluble or water-sensitive in seawater.

These other resin(s) can form up to 50 weight per cent of the total weight of the coating composition.

### Further seawater-reactive polymer

The coating composition may optionally comprise further seawater-reactive polymers. One example is an acid-functional film-forming polymer the acid groups of which are blocked by groups capable of hydrolysing or dissociating to leave a polymer soluble in seawater, the blocking groups being selected from divalent metal atoms bonded to a monovalent organic residue, divalent metal atoms bonded to a hydroxyl residue, and monoamine groups which form an organic solvent-soluble amine salt of the polymer, as described in WO 00/43460. For instance, such a seawater-reactive, acid-functional film-forming polymer the acid groups of which are blocked may be a polymer having at least one side chain bearing at least one terminal group of the formula:

-X-[-O-M-R]ₙ

wherein X represents 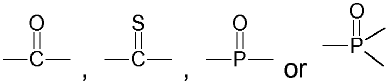
M is a metal selected from zinc, copper, and tellurium; x is an integer of 1 to 2; R represents an organic residue selected from 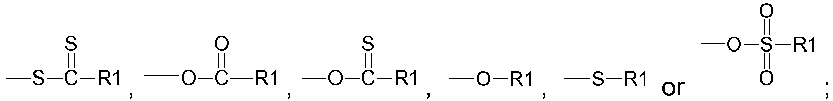 and
R1 is a monovalent organic residue, as described in EP-A-204 456.

Such a hydrolysable polymer preferably is an acrylic polymer wherein X represents 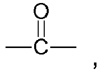 M is copper, and R represents 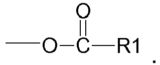 The parent acrylic polymer having a -COOH group instead of -X-[O-M-R]ₙ preferably has an acid value of 25-350 mg KOH/g. Most preferably, the hydrolysable polymer has a copper content of 0.3-20 weight per cent and R1 is the residue of a high boiling organic monobasic acid. Such hydrolysable polymers can be prepared by the processes disclosed in EP 0 204 456 and EP 0 342 276. The copper-containing film-forming polymer preferably is a polymer comprising an acrylic or methacrylic ester the alcohol residue of which includes a bulky hydrocarbon radical or a soft segment, for example a branched alkyl ester having 4 or more carbon atoms or a cycloalkyl ester having 6 or more atoms, a polyalkylene glycol monoacrylate or monomethacrylate optionally having a terminal alkyl ether group or an adduct of 2-hydroxyethyl acrylate or methacrylate with caprolactone, as described in EP 0 779 304.

Alternatively, such a seawater-reactive, acid-functional film-forming polymer the acid groups of which are blocked may be a carboxylic acid-functional polymer. For example, it may be a polymer of acrylic or methacrylic acid with one or more alkyl acrylates or methacrylates, at least some of the acid groups of which have been converted to groups of the formula -COO-M-OH, wherein M is a divalent metal such as copper, zinc, calcium, magnesium or iron, as described in GB 2,311,070.

Another example of such a seawater-reactive, acid-functional film-forming polymer the acid groups of which are blocked is a polymer that is a salt of an amine. Preferably, it is a salt of an amine containing at least one aliphatic hydrocarbon group having 8 to 25 carbon atoms and an acid-functional film-forming polymer as described in EP 0 529 693, the acid-functional polymer preferably being an addition polymer of an olefinically unsaturated carboxylic acid, sulphonic acid, acid sulphate ester, phosphonic acid or acid phosphate ester and at least one olefinically unsaturated co-monomer, the unsaturated carboxylic acid for example being acrylic or methacrylic acid, the unsaturated sulphonic acid for example being 2-acrylamido-2-methylpropane sulphonic acid (AMPS), and the film-forming polymer preferably being an amine sulphonate polymer containing units of an organocyclic ester as described in WO 99/37723.

### Further resins that are slightly soluble or water-sensitive in seawater

The coating composition may optionally comprise further resins that are slightly soluble or water-sensitive in seawater. As examples of suitable polymers or resins that are slightly soluble or water-sensitive in seawater the following compounds may be mentioned: vinyl ether polymer, for example a poly(vinyl alkyl ether), such as polyvinyl methyl ether, polyvinyl ethyl ether, polyvinyl propyl ether and polyvinyl isobutyl ether, or a polymer of a vinyl alkyl ether with vinyl acetate or vinyl chloride; alkyd resins, modified alkyd resins; polyurethanes; saturated polyester resins; poly-N-vinyl pyrollidones; epoxy polymers; epoxy esters; epoxy urethanes; linseed oil, castor oil, soybean oil and derivatives of such oils; acrylate ester polymers such as a homopolymer or polymer of one or more alkyl acrylates or methacrylates which preferably contain 1 to 6 carbon atoms in the alkyl group and may contain a co-monomer such as acrylonitrile or styrene; vinyl acetate polymers such as polyvinyl acetate or a vinyl acetate vinyl chloride polymer; polyamine, particularly a polyamide having a plasticising effect such as a polyamide of a fatty acid dimer or the polyamide sold under the Trademark "Santiciser", and rosin material.

Such a rosin material preferably is rosin, particularly wood rosin or alternatively tall rosin or gum rosin. The main chemical constituent of rosin is abietic acid. The rosin can be any of the grades sold commercially, preferably that sold as WW (water white) rosin. The rosin material can alternatively be a rosin derivative, for example a maleinised or fumarised rosin, hydrogenated rosin, formylated rosin or polymerised rosin, or a rosin metal salt such as calcium, magnesium, copper or zinc rosinate.

### Optional Additives:

Additives that can be added to the fouling control coating composition include, reinforcing agents, stabilisers, thixotropes or thickening agents, plasticisers, liquid carriers and non-biocidal pigments.

Examples of suitable reinforcing agents that can be added to the fouling control coating composition are fibres, e.g., carbide fibres, silicon-containing fibres, metal fibres, carbon fibres, sulphide fibres, phosphate fibres, polyamide fibres, aromatic polyhydrazide fibres, aromatic polyester fibres, cellulose fibres, rubber fibres, acrylic fibres, polyvinylchloride fibres, and polyethylene fibres. Preferably, the fibres have an average length of 25 to 2,000 microns and an average thickness of 1 to 50 microns with a ratio between the average length and the average thickness of at least 5.
Examples of suitable stabiliser agents are moisture scavengers, zeolites, aliphatic or aromatic amines such as dehydroabietylamine, tetraethylorthosilicate, and triethyl orthoformate.

Examples of suitable thixotropes or thickening agents are silicas, bentones, and polyamide waxes.

Examples of suitable non-polymeric plasticisers are phthalate esters such as dibutyl phthalate, butyl benzyl phthalate or dioctyl phthalate, phosphate triesters such as tricresyl or tris(isopropyl)phenyl phosphate, or chlorinated paraffins, and sulphonamides such as N-substituted toluene sulphonamide.
Such a plasticiser can for example be present in the coating composition at up to 50% by weight, most preferably at least 5% and up to 25% by weight.

Examples of suitable liquid carriers are organic solvents, organic non-solvents, and water. Suitable examples of organic solvents are an aromatic hydrocarbon such as xylene, toluene or trimethyl benzene, an alcohol such as n-butanol, an ether alcohol such as butoxyethanol or methoxypropanol, an ester such as butyl acetate or isoamyl acetate, an ether-ester such as ethoxyethyl acetate or methoxypropyl acetate, a ketone such as methyl isobutyl ketone or methyl isoamyl ketone, an aliphatic hydrocarbon such as white spirit, or a mixture of two or more of these solvents. It is possible to disperse the coating in an organic non-solvent for the film forming components in the coating composition. Alternatively, the coating can be water-based; for example, it can be based on an aqueous dispersion.

Examples of non-biocidal pigments that can be added to the coating composition are slightly seawater-soluble non-biocides such as zinc oxide and barium sulphate and seawater-insoluble non-biocides such as fillers and colouring pigments, e.g., titanium dioxide, ferric oxide, phthalocyanine compounds, and azo pigments. Such highly insoluble pigments are preferably used at less than 60% by weight of the total pigment component of the paint, most preferably less than 40%.

The coating composition may have a pigment volume concentration of 30 to 60%.

### The ingredient having biocidal properties for aquatic organisms

The ingredient having marine biocidal properties usually is a biocide for aquatic organisms. This biocide can be mixed with the polymers using conventional paint-blending techniques. When the ingredient having marine biocidal properties is a pigment, it can be all or part of the pigment of the paint.

The biocide of the present invention can be one or more of an inorganic, organometallic, metal-organic or organic biocide for marine or freshwater organisms. Examples of inorganic biocides include copper metal and copper salts such as copper oxide, copper thiocyanate, copper bronze, copper carbonate, copper chloride, copper nickel alloys, and silver salts such as silver chloride or nitrate; organometallic and metal-organic biocides include zinc pyrithione (the zinc salt of 2-pyridinethiol-1-oxide), copper pyrithione, bis (N-cyclohexyl-diazenium dioxy) copper, zinc ethylene-bis(dithiocarbamate) (i.e. zineb), zinc dimethyl dithiocarbamate (ziram), and manganese ethylene-bis(dithiocarbamate) complexed with zinc salt (i.e. mancozeb); and organic biocides include formaldehyde, dodecylguanidine monohydrochloride, thiabendazole, N-trihalomethyl thiophthalimides, trihalomethyl thiosulphamides, N-aryl maleimides such as N-(2,4,6-trichlorophenyl) maleimide, 3-(3,4-dichlorophenyl)-1,1-dimethylurea(diuron),2,3,5,6-tetrachloro-4-(methylsulphonyl) pyridine, 2-methylthio-4-butylamino-6-cyclopopylamino-s-triazine, 3-benzo[b]thien-yl-5,6-dihydro-1,4,2-oxathiazine 4-oxide, 4,5-dichloro-2-(n-octyl)-3(2H)-isothiazolone, 2,4,5,6-tetrachloroisophthalonitrile, tolylfluanid, dichlofluanid, diiodomethyl-p-tosylsulphone, capsciacin, N-cyclopropyl-N'-(1,1-dimethylethyl)-6-(methylthio)-1,3,5-triazine-2,4-diamine, 3-iodo-2-propynylbutyl carbamate, medetomidine, 1,4-dithiaanthraquinone-2,3-dicarbonitrile (dithianon), boranes such as pyridine triphenylborane, a 2-trihalogenomethyl-3-halogeno-4-cyano pyrrole derivative substituted in position 5 and optionally in position 1, such as 2-(p-chlorophenyl)-3-cyano-4-bromo-5-trifluoromethyl pyrrole (tralopyril), and a furanone, such as 3-butyl-5-(dibromomethylidene)-2(5H)-furanone, and mixtures thereof, macrocyclic lactones such as avermectins, for example avermectin B1, ivermectin, doramectin, abamectin, amamectin and selamectin, and quaternary ammonium salts such as didecyldimethylammonium chloride and an alkyldimethylbenzylammonium chloride.

In the context of the present invention, an inorganic biocide is a biocide whose chemical structure comprises a metal atom and which is free of carbon atoms; an organometallic biocide is a biocide whose chemical structure comprises a metal atom, a carbon atom, and a metal-carbon bond; a metal-organic biocide is a biocide whose chemical structure comprises a metal atom, a carbon atom, and which is free of metal-carbon bonds; and an organic biocide is biocide whose chemical structure comprises a carbon atom and which is free of metal atoms.

Furthermore, the biocide may optionally be wholly or partially encapsulated, adsorbed or supported or bound. Certain biocides are difficult or hazardous to handle and are advantageously used in an encapsulated or absorbed or supported or bound form. Additionally, encapsulation, absorption or support or binding of the biocide can provide a secondary mechanism for controlling biocide leaching rate from the coating system in order to achieve an even more gradual release and long lasting effect.

The method of encapsulation, adsorption or support or binding of the biocide is not particularly limiting for the present invention. Examples of ways in which an encapsulated biocide may be prepared for use in the present invention include mono and dual walled amino-formaldehyde or hydrolysed polyvinyl acetate-phenolic resin capsules or microcapsules as described in EP1791424. Examples of ways in which an absorbed or supported or bound biocide may be prepared include the use of host-guest complexes such as clathrates as described in EP0709358, phenolic resins as described in EP0880892, carbon-based adsorbents such as those described in EP1142477, or inorganic microporous carriers such as the amorphous silicas, amorphous aluminas, pseudoboehmites or zeolites described in EP1115282.

The invention will be elucidated with reference to the following examples. These are intended to illustrate the invention but are not to be construed as limiting in any manner the scope thereof.

### Examples

### Example 1 - Preparation of polymer (a1)

The sulphonic acid-capped quaternised monomer was prepared in the following manner:
Dimethylaminopropyl methacrylamide (192.1 g), dimethylcarbonate (179.6 g) and methanol (208 g), were placed in a stainless steel, high pressure reaction vessel. The sealed vessel was heated to 125 °C for 4 hours. The cooled solution was filtered and dried *in vacuo* after addition of methanol (150 g).

The resulting viscous amber liquid, consisting substantially of the corresponding alkyltrimethyl ammonium carbonate (244.7 g), was diluted with xylene (200 g) and placed in a 2 L round bottom flask. To this was added at room temperature with stirring over 30 minutes a solution of dodecylbenzenesulphonic acid (244.7 g) in xylene (200 g), and stirring was continued overnight to provide a solution of the sulphonic acid-capped quaternised monomer in xylene.

To a stirred polymerisation reaction vessel containing xylene (325.9 g) at 85°C was added a solution of monomers consisting of a solution of the sulphonic acid-capped quaternised monomer prepared as described above (474.5 g), isobornyl methacrylate (217.6 g), butyl methacrylate (139.2 g) and 2,2'-azodi(2-methylbutyronitrile) (AMBN) initiator (4.7 g) in xylene (42.4 g) at constant rate over 5 hours. The temperature was increased to 95°C and a solution of AMBN (2.35 g) in xylene (21.15 g) was added and the reaction vessel was maintained at this temperature for 2 hours. The reaction vessel was cooled to room temperature to provide Polymer solution 1.

### Example 2 - Preparation of the polymer comprising silyl ester groups (a2)

To a stirred polymerisation reaction vessel containing xylene (250.0 g) at 85°C, was added a solution of methyl methacrylate (282.0 g), methoxyethyl acrylate (30.6 g) and tri-isopropylsilyl acrylate (375.3 g) and AMBN (9.0 g) in xylene (81.3 g) at constant rate over 3.5 hours. The temperature was increased to 95°C and solution of AMBN (4.5 g) in xylene (40.6 g) was added and the reaction vessel was maintained at this temperature for 2 hours. The reaction vessel was cooled to room temperature to provide Polymer solution 2.

### Examples 3 to 5 - Paint formulations

The following materials were mixed in the stated parts by weight (pbw) using a high speed disperser to form copper containing fouling control paints of Examples 3, 4 and 5. Paint formulation of Example 3 is according to the invention. Paint formulation of Examples 4 and 5 are comparative Examples since they only contain one of the two types of polymers.

| **Name** | **Description** | **Example 3** | **Example 4 *(comparative Example)*** | **Example 5 *(comparative Example)*** |
|---|---|---|---|---|
| | | pbw | pbw | pbw |
| Polymer solution 1 (a1) of Example 1 | Film Former | 25 | 50 | 0 |
| Polymer solution 2 (a2) of Example 2 | Film Former | 27 | 0 | 53 |
| Iron oxide (Bayferrox 130BM) | Pigment | 6.3 | 6.3 | 6.3 |
| Copper pyrithione (Lonza) | Biocide | 2 | 2 | 2 |
| Zinc Oxide (Larvik) | Pigment | 4.3 | 4.3 | 4.3 |
| Cuprous oxide (American Chemet) | Biocide | 30 | 30 | 30 |
| Polyamide wax (Disparlon A600-020X, Kusomoto Chemicals) | Thixotrope | 1.8 | 1.8 | 1.8 |
| Xylene | Solvent | 4.7 | 6.5 | 3.1 |

### Antifouling (fouling control) Tests

The anti-fouling (fouling control) performance of paint formulation of Example 3 and comparative paint formulations of Examples 4 and 5 were compared by applying the formulations to 60 x 60 cm marine plywood panels by roller to give a dry film thickness of about 150 microns. The boards had been pre-primed with Interprotect epoxy primer (International Paint Ltd). Each coating was allowed to cure fully under ambient conditions before the start of testing.

Test panels were simultaneously immersed in waters at Hartlepool (UK) and also simultaneously immersed in natural tropical marine waters at a depth of 0.54 to 1.0 m in Changi, Singapore where growth is known to be severe. The panels were periodically removed from the water to be photographed and the extent of fouling on the coatings was assessed prior to re-immersion of the panels.

| | Total % coverage of fouling | | |
|---|---|---|---|
| Location | Example 3 | Example 4 | Example 5 |
| Hartlepool (10 weeks) | 89% | 95% | 94% |
| Singapore (15 weeks) | 19% | 33% | 37% |

In both the UK and Singapore waters, the coatings formed from example 3 according to the invention exhibited less fouling than the comparative coatings formed from examples 4 and 5.

### Example 6 - Preparation of a polymer comprising quaternary ammonium groups neutralised by a conjugate base of a carboxylic acid (a3)

The carboxylic acid-capped quaternised monomer was prepared following the general procedure described in Example 1 for the preparation of the sulphonic acid-capped quaternised monomer, except that the sulphonic acid, dodecylbenzenesulphonic acid, was replaced on an equimolar basis by a carboxylic acid, palmitic acid, to provide a solution of the carboxylic acid-capped quaternised monomer in xylene.

The carboxylic acid-capped quaternised monomer was then polymerised following the general procedure described Example 1 for the preparation of Polymer solution 1 (a1), except that the sulphonic acid-capped quaternised monomer was replaced on an equimolar basis by the carboxylic acid-capped quaternised monomer to provide Polymer solution 3.

### Example 7 - Preparation of the polymer comprising silyl ester groups (a4)

To a stirred polymerisation reaction vessel containing xylene (172.4 g) at 80°C, was added a solution of methyl methacrylate (72.9), methoxyethyl acrylate (10.8 g) and tri-isopropylsilyl acrylate (114.5 g) and AMBN (2.1 g) in xylene (19.3 g) at constant rate over 4 hours. A solution of AMBN (1.1 g) in xylene (40.6 g) was added and the temperature was increased to 95°C. The reaction vessel was maintained at this temperature for 30 minutes. The reaction vessel was cooled to room temperature to provide Polymer solution 4.

### Examples 8 and 9 - Paint formulations

The following materials were mixed in the stated % by weight using a high speed disperser to form copper containing fouling control paints of Examples 8 and 9. The paint formulation of Example 8 is according to the invention. The paint formulation of Example 9 is a comparative example where the polymer comprising quaternary ammonium groups neutralised by a conjugate base of a sulphonic acid used in Example 8 has been replaced by the polymer comprising quaternary ammonium groups neutralised by a conjugate base of a carboxylic acid.

| Name | Description | Example 8 | Example 9 *(comparative Example)* |
|---|---|---|---|
| | | Wt% | Wt% |
| Polymer solution 1 (a1) of Example 1 | Film Former | 12.4 | 0 |
| Polymer solution 3 (a3) of Example 6 | Film Former | 0 | 11.8 |
| Polymer solution 4 (a4) of Example 7 | Film Former | 14.8 | 14.8 |
| Diisononyl phthalate (ExxonMobil) | Plasticiser | 2.3 | 2.3 |
| Carbon black (Lampblack 101, Orion Engineered Carbon) | Pigment | 2.3 | 2.3 |
| Copper pyrithione (Lonza) | Biocide | 6.6 | 6.6 |
| Zinc Oxide (Larvik) | Pigment | 12.4 | 12.4 |
| Cuprous oxide (American Chemet) | Biocide | 40.6 | 40.6 |
| AntiTerra 203 (BYK-Chemie) | Thixotrope | 0.3 | 0.3 |
| Butanol | Solvent | 8.3 | 8.9 |

### Drying time test

The paint formulation prepared in Example 8 and the comparative Example 9 were applied to glass strips 25 mm wide, 300 mm long and 3 mm thick using a cube applicator with a 300 micrometre nominal gap size. The drying times were determined using a BK Drying Recorder at ambient room temperature following the procedure described in ASTM D 5895-13: Measuring Times of Drying or Curing During Film Formation of Organic Coatings Using Mechanical Recorders.

| | Example 8 | Example 9 |
|---|---|---|
| Dry-through time | 100 minutes | 160 minutes |

The coatings formed from example 8 exhibited faster through-drying than the coatings formed from comparative example 9.

### Storage stability test

The storage stability of the paint formulations prepared in Example 8 and comparative Example 9 was assessed by periodically measuring the viscosity of the paints. Viscosity measurements were measured at 20 °C using a Sheen Viscomaster CP1 cone and plate viscometer. Paints were stored at ambient room temperature in sealed paint cans between viscosity measurements.

| | Example 8 | Example 9 |
|---|---|---|
| Viscosity when manufactured | 5 poise | 5 poise |
| Viscosity after 14 days | 5 poise | gel |

After 14 days, the paint formulation prepared in comparative Example 9 had gelled and could no longer be used. In contrast, the viscosity of paint formulation prepared in Example 8 was unchanged and the paint was still in usable condition.

## Claims

1. A fouling control coating composition comprising an ingredient having biocidal properties for aquatic organisms and
(a1) a polymer comprising quaternary ammonium groups and/or quaternary phosphonium groups bound to the backbone of the polymer, said quaternary ammonium groups and/or quaternary phosphonium groups being neutralised by a conjugate base of a sulphonic acid having an aliphatic, aromatic, or alkaryl hydrocarbyl group, and
(a2) a polymer comprising silyl ester groups.

2. A fouling control coating composition according to claim 1 wherein the conjugate base of the sulphonic acid has an aliphatic, aromatic, or alkaryl hydrocarbyl group comprising 6 or more carbon atoms.

3. The fouling control coating composition of any preceding claim wherein the polymer comprising silyl ester groups (a2) has a weight-average molecular weight of less than 70,000.

4. The fouling control coating composition of any preceding claim, wherein the weight ratio of polymer(a1): polymer(a2) in the fouling control coating composition is from 1:20 to 20:1, preferably 1:4 to 4:1.

5. The fouling control coating composition of any preceding claim wherein the polymer (a1) and/or the polymer (a2) are (meth) acrylic polymers.

6. The fouling control coating composition of any preceding claim, wherein polymer (a1) is obtainable by polymerisation of a monomer of Formula (I), optionally with one or more other monomers comprising one or more olefinic double bonds 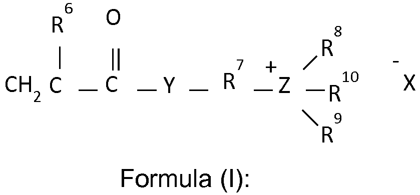
wherein Y is O or NH,
Z+ is N⁺ or P⁺,
R⁶ is a hydrogen atom or a C₁-C₄ alkyl group, preferably hydrogen or a C₁-C₂ alkyl group,
R⁷ is a C₂ or a C₃-C₁₂ divalent hydrocarbon group, preferably a C₂ or a C₃-C₈ divalent hydrocarbon group, more preferably a C₂ or a C₃-C₄ divalent hydrocarbon group,
R⁸ and R⁹ independently represent a C₁-C₆ alkyl group, preferably methyl, or an optionally substituted phenyl group,
R¹⁰ is a C₁-C₅ alkyl group,
X⁻ is a conjugate base of a sulphonic acid comprising an aliphatic, aromatic, or alkaryl hydrocarbyl group.

7. The fouling control coating composition according to any preceding claim, **characterised in that** the counter-ions (X⁻) of polymer (a1) is a conjugate base of a sulphonic acid comprising 6 to 50 carbon atoms.

8. The fouling coating composition according to any preceding claim, wherein the polymer comprising silyl ester groups (a2) comprises at least one side chain bearing at least one terminal group of the Formula (II): 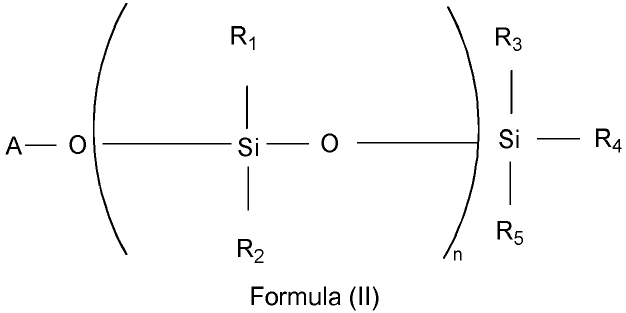 wherein A is divalent -C(O)- or -S(O)₂O- group, n is 0 or an integer of 1 to 50, and R₁, R₂, R₃, R₄, and R₅ are each independently selected from the group consisting of optionally substituted C₁₋₂₀-alkyl, optionally substituted C₁₋₂₀-alkoxy, optionally substituted C₁₋₂₀ aryl, and optionally substituted C₁₋₂₀ aryloxy.

9. The fouling control coating composition according to claim 8, wherein n = 0 and R₃, R₄, and R₅ are the same or different and represent methyl, isopropyl, n-butyl, isobutyl, or phenyl.

10. The fouling control coating composition according to any preceding claim, further comprising
(a) a rosin material and/or
(b) a non-hydrolysing, water-insoluble film-forming polymer (a3) .

11. The fouling control coating composition according to any preceding claim, wherein weight ratio of polymer (a1):polymer (a2) in the fouling control coating composition ranges from 1:4 to 4:1.

12. Method of protecting a man-made structure immersed in water from fouling by applying the fouling control coating composition as defined in any of claims 1-10 to the man-made structure, allowing the fouling control coating composition to form a coating and then immersing the coated man-made structure in water.

13. Substrate or structure coated with the fouling control coating composition according to any one of claims 1 to 11.

## Patentansprüche

1. Beschichtungszusammensetzung zur Bewuchskontrolle, umfassend einen Inhaltsstoff mit bioziden Eigenschaften für Wasserorganismen und
(a1) ein Polymer, umfassend quartäre Ammoniumgruppen und/oder quartäre Phosphoniumgruppen, die an das Rückgrat des Polymers gebunden sind, wobei die quartären Ammoniumgruppen und/oder die quartären Phosphoniumgruppen durch eine konjugierte Base einer Sulfonsäure, die eine aliphatische, aromatische oder Alkaryl-Hydrocarbyl-Gruppe besitzt, neutralisiert sind, und
(a2) ein Polymer, umfassend Silylestergruppen.

2. Beschichtungszusammensetzung zur Bewuchskontrolle nach Anspruch 1, wobei die konjugierte Base der Sulfonsäure eine aliphatische, aromatische oder Alkaryl-Hydrocarbyl-Gruppe, umfassend 6 oder mehr Kohlenstoffatomen, hat.

3. Beschichtungszusammensetzung zur Bewuchskontrolle nach einem der vorhergehenden Ansprüche, wobei das Polymer, umfassend die Silylestergruppen (a2), ein Gewichtsmittel der Molmasse von weniger als 70.000 hat.

4. Beschichtungszusammensetzung zur Bewuchskontrolle nach einem der vorhergehenden Ansprüche, wobei das Gewichtsverhältnis von Polymer (a1) : Polymer (a2) in der Beschichtungszusammensetzung zur Bewuchskontrolle von 1:20 bis 20:1, vorzugsweise 1:4 bis 4:1, beträgt.

5. Beschichtungszusammensetzung zur Bewuchskontrolle nach einem der vorhergehenden Ansprüche, wobei das Polymer (a1) und/oder das Polymer (a2) (Meth)acrylpolymere sind.

6. Beschichtungszusammensetzung zur Bewuchskontrolle nach einem der vorhergehenden Ansprüche, wobei Polymer (a1) durch Polymerisation eines Monomers der Formel (I) erhältlich ist, wahlweise mit einem oder mehreren anderen Monomeren, umfassend eine oder mehrere olefinische Doppelbindungen 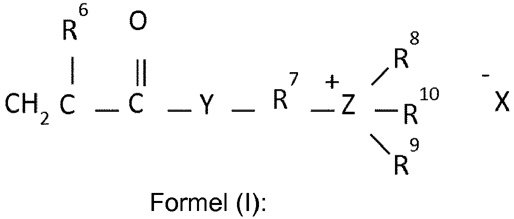
wobei Y gleich O oder NH ist,
Z⁺ gleich N⁺ oder P⁺ ist,
R⁶ ein Wasserstoffatom oder eine C₁-C₄-Alkylgruppe, vorzugsweise Wasserstoff, oder eine C₁-C₂-Alkylgruppe ist,
R⁷ eine C₂ oder eine C₃-C₁₂ divalente Kohlenwassergruppe, vorzugsweise eine C₂ oder eine C₃-C₈ divalente Kohlenwasserstoffgruppe, weiter bevorzugt eine C₂ oder eine C₃-C₄ divalente Kohlenwasserstoffgruppe, ist,
R⁸ und R⁹ unabhängig eine C₁-C₆ -Alkylgruppe, vorzugsweise Methyl, oder eine wahlweise substituierte Phenylgruppe, repräsentieren, R¹⁰ eine C₁-C₅-Alkylgruppe ist,
X⁻ eine konjugierte Base einer Sulfonsäure, umfassend eine aliphatische, aromatische oder Alkaryl-Hydrocarbyl-Gruppe, ist.

7. Beschichtungszusammensetzung zur Bewuchskontrolle nach einem der vorhergehenden Ansprüche, **dadurch gekennzeichnet, dass** die Gegenionen (X⁻) des Polymers (a1) eine konjugierte Base einer Sulfonsäure, umfassend 6 bis 50 Kohlenstoffatome, sind.

8. Beschichtungszusammensetzung zur Bewuchskontrolle nach einem der vorhergehenden Ansprüche, wobei das Polymer, umfassend die Silylestergruppen (a2), wenigstens eine Seitenkette umfasst, die wenigstens eine Endgruppe der folgenden Formel (II) besitzt: 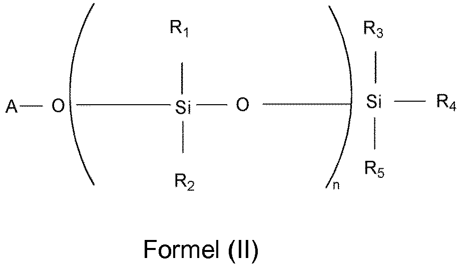 wobei A eine divalente -C(O)- oder -S(O)₂O-Gruppe ist, n gleich 0 oder eine Zahl von 1 bis 50 ist, und R₁, R₂, R₃, R₄ und R₅ jeweils unabhängig ausgewählt sind aus der Gruppe, bestehend aus wahlweise substituiertem C₁₋₂₀ Alkyl, wahlweise substituiertem C₁₋₂₀-Alkoxy, wahlweise substituiertem C₁₋₂₀-Aryl und wahlweise substituiertem C₁₋₂₀-Aryloxy.

9. Beschichtungszusammensetzung zur Bewuchskontrolle nach Anspruch 8, wobei n = 0 ist und R₃, R₄ und R₅ gleich oder verschieden sind und Methyl, Isopropyl, n-Butyl, Isobutyl oder Phenyl repräsentieren.

10. Beschichtungszusammensetzung zur Bewuchskontrolle nach einem der vorhergehenden Ansprüche, weiterhin umfassend
(a) ein Kolophoniummaterial und/oder
(b) ein nicht hydrolysierendes, wasserunlösliches, filmbildendes Polymer (a3).

11. Beschichtungszusammensetzung zur Bewuchskontrolle nach einem der vorhergehenden Ansprüche, wobei das Gewichtsverhältnis von Polymer (a1) : Polymer (a2) in der Beschichtungszusammensetzung zur Bewuchskontrolle von 1:4 bis 4:1 reicht.

12. Verfahren zum Bewuchsschutz eines von Menschenhand geschaffenen, in Wasser getauchten Bauwerks durch Auftragen der Beschichtungszusammensetzung zur Bewuchskontrolle nach einem der Ansprüche 1-10 auf das von Menschenhand geschaffene Bauwerk, so dass die Beschichtungszusammensetzung zur Bewuchskontrolle eine Beschichtung bilden kann, und anschließendes Eintauchen des von Menschenhand geschaffenen Bauwerks in Wasser.

13. Substrat oder Bauwerk, das mit der Beschichtungszusammensetzung zur Bewuchskontrolle nach einem der Ansprüche 1 bis 11 beschichtet wird.

## Revendications

1. Composition de revêtement pour le contrôle de la salissure comprenant un ingrédient ayant des propriétés biocides pour les organismes aquatiques, et
(a1) un polymère comprenant des groupes ammonium quaternaire et/ou es groupes phosphonium quaternaire liés au squelette du polymère, lesdits groupes ammonium quaternaire et/ou lesdits groupes phosphonium quaternaire étant neutralisés par une base conjuguée d'un acide sulfonique ayant un groupe aliphatique, aromatique ou alkarylhydrocarbyle, et
(a2) un polymère comprenant des groupes ester de silyle.

2. Composition de revêtement pour le contrôle de la salissure selon la revendication 1, dans laquelle la base conjuguée de l'acide sulfonique a un groupe aliphatique, aromatique ou alkarylhydrocarbyle comprenant 6 atomes de carbone ou plus.

3. Composition de revêtement pour le contrôle de la salissure de l'une des revendications précédentes, dans laquelle le polymère comprenant des groupes ester de silyle (a2) a un poids moléculaire moyen en poids inférieur à 70000.

4. Composition de revêtement pour le contrôle de la salissure de l'une des revendications précédentes, dans laquelle le rapport en poids du polymère (a1): polymère (a2) dans la composition de revêtement pour le contrôle de la salissure est compris entre 1:20 et 20:1, de préférence entre 1:4 et 4:1.

5. Composition de revêtement pour le contrôle de la salissure de l'une des revendications précédentes, dans laquelle le polymère (a1) et/ou le polymère (a2) est/sont des polymères (méth)acryliques.

6. Composition de revêtement pour le contrôle de la salissure de l'une des revendications précédentes, dans laquelle le polymère (a1) peut être obtenu par polymérisation d'un monomère de Formule (I), éventuellement avec un ou plusieurs autre(s) monomère(s) comprenant une ou plusieurs double(s) liaison(s) oléfinique(s) 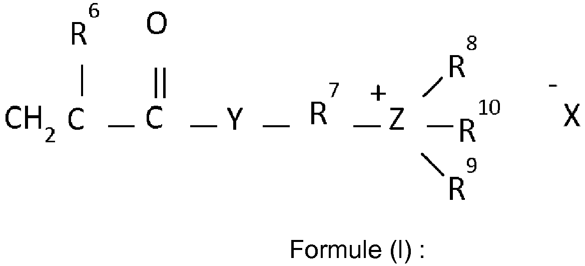 où Y représente O ou NH,
Z⁺ représente N⁺ ou P⁺,
R⁶ représente un atome d'hydrogène ou un groupe alkyle en C₁ à C₄, de préférence un atome d'hydrogène ou un groupe alkyle en C₁ à C₂,
R⁷ représente un groupe hydrocarboné divalent en C₂ ou C₃ à C₁₂, de préférence un groupe hydrocarboné divalent en C₂ ou C₃ à C₈, plus préférablement un groupe hydrocarboné divalent en C₂ ou C₃ à C₄,
R⁸ et R⁹ représentent indépendamment un groupe alkyle en C₁ à C₆, de préférence un méthyle, ou un groupe phényle éventuellement substitué,
R¹⁰ représente un groupe alkyle en C₁ à C₅,
X⁻ représente une base conjuguée d'un acide sulfonique comprenant
un groupe aliphatique, aromatique ou alkarylhydrocarbyle.

7. Composition de revêtement pour le contrôle de la salissure selon l'une des revendications précédentes, **caractérisée en ce que** les contre-ions (X⁻) du polymère (a1) représentent une base conjuguée d'un acide sulfonique comprenant 6 à 50 atomes de carbone.

8. Composition de revêtement pour le contrôle de la salissure selon l'une des revendications précédentes, dans laquelle le polymère comprenant des groupes ester de silyle (a2) comprend au moins une chaîne latérale portant au moins un groupe terminal de la Formule (II) : 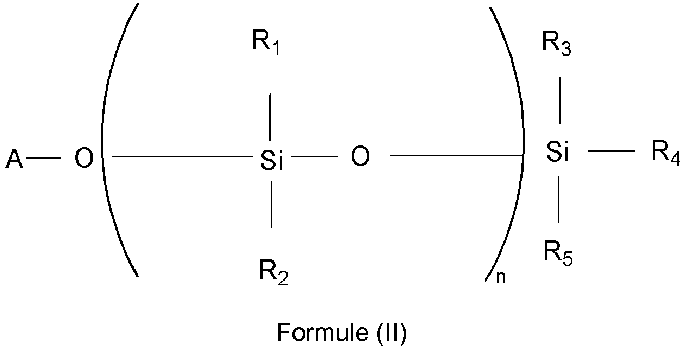 dans laquelle A représente un groupe divalent -C(O)- ou -S(O)₂O-, n est égal à 0 ou à un nombre entier compris entre 1 et 50, et R₁, R₂, R₃, R₄ et R₅ sont chacun indépendamment choisis dans le groupe constitué par un alkyle en C₁ à C₂₀ éventuellement substitué, un alcoxy en C₁ à C₂₀ éventuellement substitué, un aryle en C₁ à C₂₀ éventuellement substitué et un aryloxy en C₁ à C₂₀ éventuellement substitué.

9. Composition de revêtement pour le contrôle de la salissure selon la revendication 8, dans laquelle n = 0 et R₃, R₄ et R₅ sont identiques ou différents et représentent un méthyle, un isopropyle, un n-butyle, un isobutyle ou un phényle.

10. Composition de revêtement pour le contrôle de la salissure selon l'une des revendications précédentes, comprenant en outre
(a) un matériau de colophane et/ou
(b) un polymère (a3) filmogène insoluble dans l'eau ne s'hydrolysant pas.

11. Composition de revêtement pour le contrôle de la salissure selon l'une des revendications précédentes, dans laquelle le rapport en poids du polymère (a1):polymère (a2) dans la composition de revêtement pour le contrôle de la salissure est compris entre 1:4 et 4:1.

12. Procédé consistant à protéger une structure fabriquée par l'homme immergée dans l'eau contre la salissure en appliquant la composition de revêtement pour le contrôle de la salissure selon l'une des revendications 1 à 10 à la structure fabriquée par l'homme, permettant à la composition de revêtement pour le contrôle de la salissure de former un revêtement, et ensuite à immerger la structure revêtue fabriquée par l'homme dans de l'eau.

13. Substrat ou structure revêtu(e) de la composition de revêtement pour le contrôle de la salissure selon l'une quelconque des revendications 1 à 11.
